# EUROPEAN PATENT APPLICATION

(11) **EP 4 286 770 A1**
(43) Date of publication of application: **06.12.2023**
(21) Application number: 22177252.8
(22) Date of filing: 03.06.2022
(51) Int. Cl.: F25B 30/06, F24D 3/18, F24H 8/00, F24H 9/00

(54) **PRODUCING HEAT IN LOW CARBON ENERGY SYSTEMS**

(71) Applicant: Siemens Energy Global GmbH & Co. KG, 81739 München (DE)
(72) Inventor: The designation of the inventor has not yet been filed

(57) **Abstract**

This invention presents a technical suitable process how to utilize heat from the exhaust gas of a gas turbine by cooling it down to about 25°C by means of a heat pump. Another object of the invention is to present a solution how to assure a proper rejection of the exhaust gas stream to ambience. This is solved by an energy-efficient process for reheating / driving cold and dry exhaust gas through the stack. Advantageously, the present invention performs a surplus of about 20 percent of heat to a district heating in relation to a conventional WHRU (waste heat recovery unit)-cycle. The increase in efficiency of the present invention results in lowering the carbon footprint of a heat supply.

## Description

The present invention relates to a system for recovering heat from hot and wet exhaust gases as heat source for useful heat. Moreover, the invention relates to use the condensation heat from exhaust gas, e. g. from a gas turbine, by means of a heat pump and further the handling of dry and cold exhaust.

"The heating and cooling sector has been recognized, by the European Commission, as a priority to achieve the decarbonization and energy efficiency targets. Heating and cooling in the built environment accounts for almost 40% of the total final energy demand in Europe." [Kavvadias K., Jiménez-Navarro J.P., Thomassen G., Decarbonising the EU heating sector - Integration of the power and heating sector, EUR 29772 EN, Publications Office of the European Union, Luxembourg, 2019, ISBN 978-92-76-08386-3, doi:10.2760/943257, JRC114758.].

Heat is supplied at very different thermal capacities - ranging from single family houses over industrial sites up to district heating systems. For all thermal capacities, heat pumps have been identified as key technology for the decarbonization of the heating sector [SensfuB F., Bernath C., Kleinschmitt C., Resch G., Geipel J., Hiesl J., Liebmann L., Lumbreras S, Olmos L., Ramos A., Ploussard Q. - D7.8: Summary report - Energy Systems: Supply Perspective, http://www.set-nav.eu/sites/default/files/common files/deliverables-/WP7/D7.8 SET-Nav SummaryReport WP7 final.pdf, last visited 16th October 2020]. Today, heat supply to industrial sites and district heating systems is based on fossil fuels burned in heating and combined heat and power plants. The thermal capacity of typical units, e. g. coal fired Combined Heat and Power (CHP) plants, is in the range of several hundred megawatts. Substituting these plants by heat pumps requires heat sources at suitable capacity (>X00 MW), at appropriate temperature level (T_Source ideally significantly larger than T_Ambiance) and in the vicinity of the district heating system. There are heat sources that meet both requirements, e. g. waste heat from large scale refineries. However, their number is not at all sufficient and a cumbersome screening of potential heat sources in urban areas started in the last years. As a result, large CHP units (X00 MWth) could be replaced by a multitude of heat pumps (Y0 MWth) that are distributed within the urban areas. Distributed feed-in in a district heating system would necessitate the availability of an appropriate site next to the heat source, extra effort for noise enclosures, adaptions of the district heating systems' hydraulic designs and an associated effort (piping, pumps, ...), adaptions of the distribution electrical grid, a proper co-ordination of the heat pumps' operation, and/or a proper co-ordination of the distributed heat pumps' operation. All this shows that novel ideas for large scale heat sources are needed.

In this context, Blarke and Dotzauer [Blarke M., Dotzauer E., Intermittency-friendly and high-efficiency cogeneration: Operational optimisation of cogeneration with compression heat pump, flue gas heat recovery, and intermediate cold storage, Energy 36 (2011) 6867e6878] proposed to use heat from the flue gas of a CHP unit as heat source for a heat pump. There it is proposed to cool the flue gas to 25°C.

Releasing flue gas at this temperature of devices burning fossil, bio- or e-fuels to the ambience is technically not possible.

This invention suggests processes facilitating (i) the usage of heat from exhaust gases as heat source and (ii) releasing the exhaust gas to the ambiance efficiently and according to suitable technical approaches.

Apart from theoretical suggestions and calculations the utilization of exhaust gas waste heat by heat pumps has not been realized practically so far in the context of gas turbines. In the theoretical publications and considerations there were no solutions presented to assure a proper rejection of the exhaust gas stream to ambience.

Therefore, it is an object of the present invention to provide a comprehensive process for utilizing scarce large-scale heat sources of appropriate temperature for decarbonization of heating sector.

The exhaust gas from the burner / gas turbine combustion chamber that is cooled down to temperatures far below typical stack temperature (e. g. 25 °C) while suppling heat to a heat pump cannot be fed to the stack whilst maintaining the chimney effect (buoyancy). To avoid a decrease in the performance of the gas turbine and to not influence the emission profile of the stack it is necessary to establish a proper flow at the outlet of the stack.

It is an object of the present invention is to re-establish / ensure a proper rejection of the exhaust gas stream to atmosphere to either compensate for additional pressure losses due to the installed heat exchanger or produce the required exit velocity or natural draft of the exhaust gas at the stack.

Therefore, yet another object of the present invention is to provide a new safe and reliable sub-process for releasing cold and dry exhaust to ambiance by energy-efficient process for reheating / driving gas through the stack.

The above-mentioned aim, as well as said objects and others that will be more clear herein after, are achieved by a system according to claim 1.

Advantageously, the system according to the subject invention performs a surplus of about 20 percent of heat to the heat supply e. g. district heating in relation to a conventional WHRU (waste heat recovery unit)-cycle. In case the invention is applied to Co-Generation Units based on a CCPP (Combined cycle power plant), the surplus of heat is even larger. The increase in efficiency of the present invention results in an adequate lowering the carbon output of a heat supply.

Advantageous further embodiments of the invention are given in the subclaims.

The above-mentioned attributes, features, and advantages of the present invention and the manner of achieving them, will become more apparent and understandable with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
FIG 1 is a first embodiment of the invention comprising a heat pump cycle,
FIG 2 is a second embodiment of the invention comprising a heat pump cycle,
FIG 3 is a third embodiment of the invention comprising a heat pump cycle and
FIG 4 exhibits illustrative figures highlighting the potential of the invention.

In the drawings like reference numerals are used to refer to like elements throughout. In the following description, for purpose of explanation, numerous specific details are set forth in order to provide a thorough understanding of one or more embodiments. It may be evident that such embodiments may be practiced without these specific details.

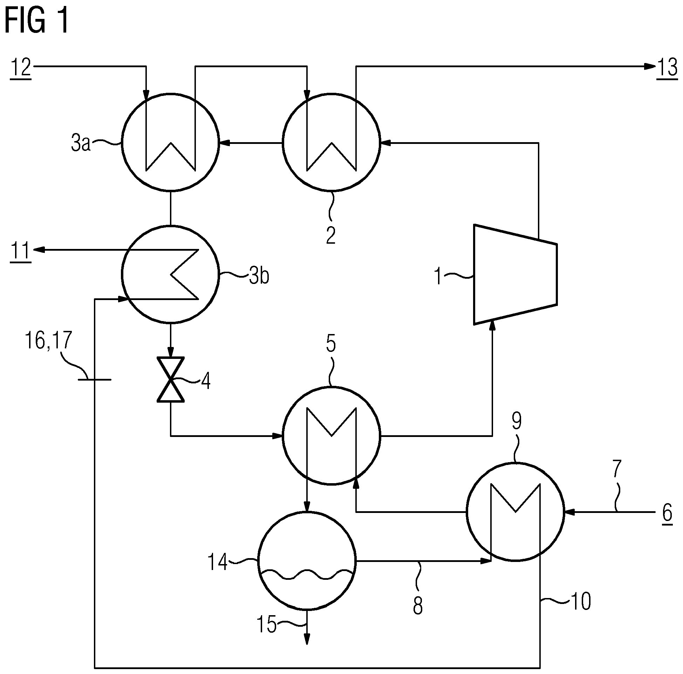

Fig 1, FIG 2 and FIG 3 each exhibit a high-temperature heat pump cycle, the cycle running from the hot side of a compressor 1 to a condenser 2, sub-cooler 3a and sub-cooler 3b, an expansion valve 4, a heat-pump-cycle-vaporizer-heat-exchanger 5 to the cold side of the compressor. Hot, wet exhaust gas 6, disposed e. g. by a gas turbine, fed in by a hot, wet exhaust gas inlet 7 transfers heat to the heat-pump-cycle-vaporizer-heat-exchanger 5, while the hot, wet exhaust gas 6 is cooled down to cold, dry exhaust gas 8. Cooling exhaust gas from typical stack temperatures of e. g. 70 °C to for instance 25 °C the water vapor incorporated in the exhaust gas condenses to a condensate 15 in an exhaust gas condenser 14 while releasing condensation heat to the cold, dry exhaust gas 8. The condensate 15 is disposed out of the exhaust gas condenser 14 for further usage.

According to the first embodiment of the invention shown in Figure 1 the hot, wet exhaust gas 6 transfers heat directly to the heat-pump-cycle-vaporizer-heat-exchanger 5, whereby it is cooled down to cold, dry exhaust gas 8. In a pre-exhaust-gas-heat-exchanger 9, which is located between the hot, wet exhaust gas inlet 7 and the heat-pump-cycle-exhaust-gas-heat-exchanger 5 heat from the hot, wet exhaust gas 6 is transferred to the cold, dry exhaust gas 8 turning it to warm, dry exhaust gas 10. The warm, dry exhaust gas 10 is forwarded through the second sub-cooler 3b, where transferred heat turns it to re-heated, dry exhaust gas 11. By this the cold and dry exhaust gas 8 is re-heated efficiently by using a series of heat exchangers transferring heat from (i) the hot and wet exhaust gas 6 (~70°C -> dew point) to the cold and dry exhaust gas 8 (25° C -> X°C) and (ii) from the 2nd sub-cooler 3b of the heat-pump cycle. The first sub-cooler 3a and the condenser 2 of the heat pump cycle are used to pre-heat the heat supply return flow 12 into a reheated heat supply feed flow 13. The heat supply flow 12, 13 passes the sub-cooler 3a and then the condenser 2, which is counter flow to the heat pump cycle flow, which passes the condenser 2 and then the sub-cooler 3a. The heat supply flow may be given by a district heating flow.

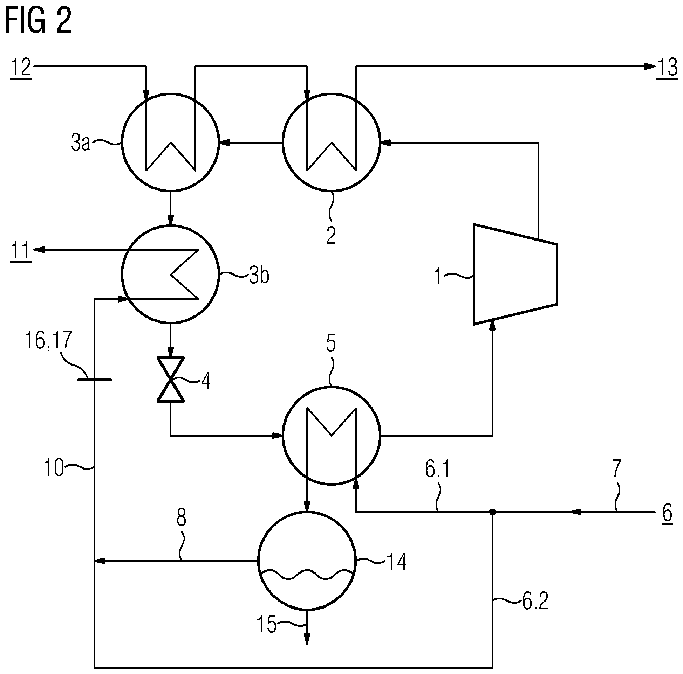

According to the second embodiment of the invention shown in Figure 2 the hot and wet gas stream 6 is split into two parts. The first part 6.1 is cooled down and partly condensed as explained above for the first embodiment. The thus obtained cold and dry stream 8 is then re-heated by mixing with the second part 6.2 of the total exhaust gas 6. If necessary, the mixed stream is further heated using the second sub-cooler 3b of the heat pump.

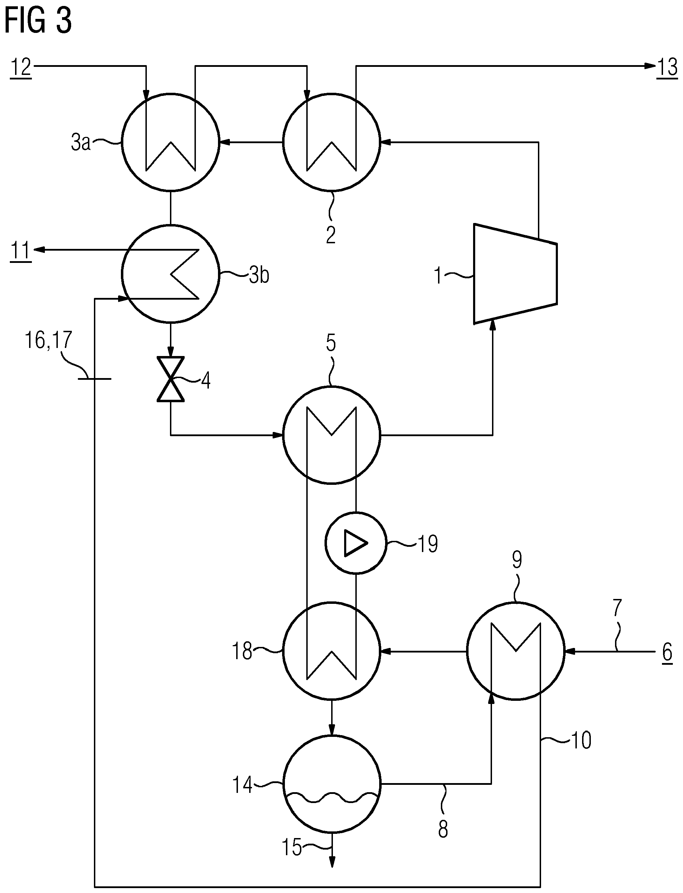

According to the third embodiment of the invention shown in Figure 3 the hot and wet gas stream 6 transfers heat to a heat-exchanger-intermediate-cycle 18, which forms together with the heat-pump-cycle-vaporizer-heat-exchanger 5 and a pump intermediate cycle 19 an intermediate cycle. By this heat from the hot and wet gas stream 6 is transferred indirectly to the heat-pump-cycle-vaporizer-heat-exchanger 5.

The second embodiment of the invention shown in Figure 2 may be combined with the first embodiment of the invention shown in Figure 1 or the third embodiment of the invention shown in Figure 3 by a person skilled in the art without employing inventive endeavor.

In another embodiment, a fan 16 is arranged in the passage of the exhaust gas for to drive the dry and cold exhaust gas through the stack.

In yet another embodiment, a jet nozzle 17 is used to remove the dry and cold exhaust gas through the stack.

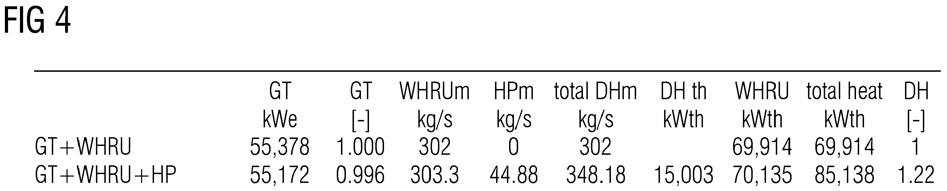

Figure 4 depicts exemplary figures for a conventional cycle comprising a (open cycle) gas turbine GT and a waste heat recovery unit WHRU in line 1 and for the subject invention comprising a gas turbine GT, a waste heat recovery unit WHRU and a heat pump HP in line 2. It is evident, that the system according to the subject invention delivers a surplus of 22 percent of heat to the district heating in relation to the conventional cycle.

According to the invention the flue gas is cooled down to a temperature in the range of 10°C ... 40 °C. In a preferred embodiment the flue gas is cooled down to 25°C.

Cooling exhaust gas from typical stack temperatures of e. g. 70 °C to 25 °C the water vapor incorporated in the exhaust gas condenses while releasing condensation heat. In the present description the terms hot and wet exhaust 6 and cold and dry exhaust 8 are used to describe the exhaust gas at different points of the process.

While the invention has been illustrated and described in detail with the help of preferred embodiments, the invention is not limited to the disclosed examples. Other variations may be deducted by those skilled in the art without leaving the scope of protection of the claimed invention.

### List of denotations

- 1 -: compressor
- 2 -: condenser heat-pump-cycle
- 3a, 3b -: first and second sub-cooler
- 4 -: expansion valve
- 5 -: heat-pump-cycle-vaporizer-heat-exchanger
- 6 -: hot, wet exhaust gas
- 7 -: hot, wet exhaust gas inlet
- 8 -: cold, dry exhaust gas
- 9 -: pre-exhaust-gas-heat-exchanger
- 10 -: warm, dry exhaust gas
- 11 -: re-heated, dry exhaust gas
- 12 -: heat supply / district heating return flow
- 13 -: heat supply / district heating feed flow
- 14 -: condenser exhaust gas
- 15 -: condensate
- 16 -: fan
- 17 -: jet nozzle
- 18 -: heat-exchanger-intermediate-cycle
- 19 -: pump intermediate cycle

- CCPP -: Combined Cycle Power Plant
- CHP -: combined heat and power
- DH -: district heating
- GT -: gas turbine
- HP -: heat pump
- WHRU -: waste heat recovery unit

## Claims

1. System for utilizing heat from exhaust gases as heat source for heat supply, providing
- a heat pump cycle, the cycle running from the hot side of a compressor (1) to a condenser heat-pump-cycle (2), an expansion valve (4), a heat-pump-cycle-vaporizer-heat-exchanger (5) to the cold side of the compressor,
- hot, wet exhaust gas (6), fed by a hot, wet exhaust gas inlet (7), transfers heat to the heat-pump-cycle-vaporizer-heat-exchanger (5) and is cooled down to cold, dry exhaust gas (8),
- heat out of the system is utilized to turn the cold, dry exhaust gas (8) to warm, dry exhaust gas (10),
- a heat supply return flow (12) passing the condenser heat-pump-cycle (2), where the transferred heat is utilized as heat source for a heat supply feed flow (13).

2. System according to claim 1
further providing
the transfer of heat of the hot, wet exhaust gas (6) to the heat-pump-cycle-vaporizer-heat-exchanger (5) is realized by a heat-exchanger-intermediate-cycle (18), which dissipates heat from the hot, wet exhaust gas (6) and which forms together with the heat-pump-cycle-vaporizer-heat-exchanger (5) an intermediate cycle.

3. System according to one of the preceding claims 1 or 2 and further providing
the heat out of the system in order to turn the cold, dry exhaust gas (8) to warm, dry exhaust gas (10) is utilized by that the hot, wet exhaust gas (6) is split into a first portion of hot, wet exhaust gas (6.1) and a second portion of hot, wet exhaust gas (6.2), which is complement to the first portion, the first portion being fed to the heat-pump-cycle-vaporizer-heat-exchanger (5), where it is cooled down to cold, dry exhaust gas (8), the cold, dry exhaust gas (8) being mixed with the second portion of hot, wet exhaust gas (6.2), providing the warm exhaust gas (10).

4. System according to one of the preceding claims 1 or 2 and further providing
the heat out of the system in order to turn the cold, dry exhaust gas (8) to warm, dry exhaust gas (10) is utilized by a pre-exhaust-gas-heat-exchanger (9), which is located between the hot, wet exhaust gas inlet (7) and the heat-pump-cycle-vaporizer-heat-exchanger (5), heat from the hot, wet exhaust gas (6) is transferred to the cold, dry exhaust gas (8) turning the cold, dry exhaust gas (8) to the warm, dry exhaust gas (10).

5. System according to one of the preceding claims and further providing
a first sub-cooler (3a), located in the heat pump cycle between the expansion valve (4), and directly neighbored to the condenser heat-pump-cycle (2),
the heat supply return flow (12) first passing the first sub-cooler (3a) and then the condenser heat-pump-cycle (2) .

6. System according to one of the preceding claims and further providing
a second sub-cooler (3b), located in the heat pump cycle between condenser heat-pump-cycle (2) and directly neighbored to the expansion valve (4), the warm, dry exhaust gas (10) is forwarded through the second sub-cooler (3b), where transferred heat turns it to re-heated, dry exhaust gas (11).

7. System according to one of the preceding claims and further providing
a fan (16) to drive the warm exhaust gas (10) through the stack.

8. System according to one of the preceding claims and further providing
a jet nozzle (17) to remove the warm exhaust gas (10) through the stack.

9. System according to one of the preceding claims and further providing
the hot, wet exhaust gas (6) being released by a gas turbine.

10. System according to one of the preceding claims and further providing
the heat supply return flow (12) is given by a district heating return flow and the heat supply feed flow (13) is given by a district heating feed flow.
